# EUROPÄISCHE PATENTSCHRIFT

(11) **EP 1 786 639 B1**
(45) Veröffentlichungstag und Bekanntmachung des Hinweises auf die Patenterteilung: **06.08.2008**
(21) Anmeldenummer: 05768082.9
(22) Anmeldetag: 14.07.2005
(51) Int. Cl.: B60G 17/04, B62D 55/112

(54) **EINRICHTUNG ZUM AUSGLEICH VON TEMPERATURSCHWANKUNGSBEDINGTEN ÄNDERUNGEN DER BODENFREIHEIT AN EINEM KETTENFAHRZEUG**
DEVICE FOR LEVELLING OUT MODIFICATIONS OF THE CLEARANCE ABOVE ROAD SURFACE ON A TRACKED VEHICLE, WHICH ARE DEPENDENT ON TEMPERATURE VARIATIONS
DISPOSITIF POUR COMPENSER DES CHANGEMENTS DE LA GARDE AU SOL D'UN VEHICULE CHENILLE QUI SONT LIES A DES FLUCTUATIONS DE TEMPERATURE

(30) Priorität: 06.08.2004 DE 102004038196
(43) Veröffentlichungstag der Anmeldung: 23.05.2007
(73) Patentinhaber: Krauss-Maffei Wegmann GmbH & Co. KG, 80997 München (DE)
(72) Erfinder: SCHLEGL, Eugen, 82194 Gröbenzell (DE)
(74) Vertreter: Feder, Wolf-Dietrich
(86) Internationale Anmeldenummer: PCT/DE2005/001242
(87) Internationale Veröffentlichungsnummer: WO 2006/012832

(56) Entgegenhaltungen:
- EP-A- 1 559 596
- US-A- 3 752 499
- US-A- 5 097 916

## Beschreibung

Die Erfindung betrifft eine Einrichtung zum Ausgleich von temperaturschwankungsbedingten Änderungen der Bodenfreiheit an einem Kettenfahrzeug.

Es ist allgemein bekannt, an Radfahrzeugen und Kettenfahrzeugen hydropneumatische Radaufhängungen einzusetzen, bei welchen die Räder jeweils an einer Schwinge angeordnet sind, die schwenkbar am Fahrzeuggehäuse gelagert ist, wobei jeweils zwischen der Schwinge und dem Fahrzeuggehäuse ein hydropneumatisches Federelement angeordnet ist.

Hydropneumatische Federelemente haben die physikalische Eigenschaft, dass sie sich in ihrer Federkennlinie mit der Temperatur ändern. Werden keine Maßnahmen getroffen, so führt dies bei Radfahrzeugen zu einer temperaturabhängigen Bodenfreiheit. Dies wird in der Regel so akzeptiert.

Bei Kettenfahrzeugen ändert sich aber dann außerdem die Kettenspannung. Dies ist nicht hinnehmbar, da eine zu hohe Kettenspannung zu deutlich höherem Verschleiß führt und eine zu niedere Kettenspannung zum Springen der Kette und damit zum zeitweisen Ausfall der Brems- und Lenkfähigkeit des Kettenfahrzeugs führen kann.

Es ist bekannt, die temperaturbedingte Änderung der Kettenspannung an Kettenfahrzeugen durch Verwendung aktiver Kettenspanner auszugleichen. Dies erfordert allerdings eine sehr aufwendige Regelung, da die Kraft am Kettenspanner je nach Vortriebskraft sehr stark schwankt. So muss beispielsweise bei verschiedenen Fahrzeugen angehalten und die Verstellung am Kettenspanner vorgenommen werden und dann kann erst wieder weitergefahren werden. Bei der Verwendung eines aktiven Kettenspanners wird zudem das Risiko einer Fehlfunktion erhöht, da nicht nur der notwendige Temperaturausgleichsweg sondern der gesamte Verstellweg des Kettenspanners zu einer zu hohen oder zu einer zu niedrigen Kettenspannung beitragen können.

In dem älteren, aber nicht vorveröffentlichten Dokument EP 1 559 596 A1 werden eine hydropneumatische Federungsvorrichtung und ein Verfahren zum Ansteuern derselben beschrieben. Es handelt sich um ein Verfahren zum Ausgleich von temperaturschwankungsbedingten Änderungen der Bodenfreiheit an einem Kettenfahrzeug, bei welchem die Laufräder der Kette jeweils an einer Schwinge angeordnet sind, die schwenkbar am Fahrzeuggehäuse gelagert ist, wobei jeweils zwischen der Schwinge und dem Fahrzeuggehäuse ein hydropneumatisches Federelement angeordnet ist. Gemäß diesem bekannten Verfahren wird laufend die Temperatur oder der Druck im hydropneumatischen Federelement gemessen und ein elektrisches Messsignal erzeugt. Aus den Werten des Messsignals wird nach einem vorgegebenen Programm und/oder vorgegebenen Einstellwerten der Wert eines Steuersignals errechnet und ein Steuersignal erzeugt. Das Steuersignal wird der Antriebsvorrichtung einer Einrichtung zur Zu- oder Abführung von Gas zu oder von der Gaskammer des hydropneumatischen Federelements zugeführt. Die Zu- oder Abführung von Gas wird kontrolliert und ein Stellsignal zu ihrer Beendigung erzeugt, wenn die gewünschte Bodenfreiheit eingestellt ist.
Die Einrichtung zur Durchführung des bekannten Verfahrens umfasst eine Gaskammer mindestens eines hydropneumatischen Federelements pro Fahrzeugseite, welche mit dem Arbeitsraum eines gasgefüllten Verstellzylinders verbunden ist. An diesem hydropneumatischen Federelement ist eine Messvorrichtung zur Messung der Temperatur und/oder des Drucks im Federelement angeordnet, welche elektrische Messsignale abgibt. Die Messsignale werden einer elektrischen Steuereinrichtung zugeführt. Am Verstellzylinder ist ein Weggeber zur Messung der Kolbenverschiebung und/oder ein Druckgeber zur Messung des Drucks im Verstellzylinder angeordnet, der elektrische Stellsignale abgibt. Diese Stellsignale werden der elektrischen Steuereinrichtung zugeführt und der Kolben des Verstellzylinders wird von einer elektrisch ansteuerbaren Antriebsvorrichtung betätigt. Die Steuereinrichtung errechnet aus den Messsignalen und den Stellsignalen gemäß dem vorgegebenen Programm und/oder vorgegebenen Einstellwerten Steuersignale, welche der Antriebsvorrichtung des Verstellzylinders zugeführt werden, bis ein vorgegebener Wert der Stellsignale erreicht ist.
Bei einer Ausführungsform der bekannten Einrichtung ist die Antriebsvorrichtung für den Kolben des Verstellzylinders als elektrischer Antrieb ausgebildet. Dieser Antrieb umfasst einen Drehwinkelsensor, mittels dessen die Lage des Dosierkolbens messbar ist. Bei einer anderen Ausführungsform wird der Kolben des Verstellzylinders hydraulisch angetrieben, indem der Ölraum des Verstellzylinders über ein Steuerventil mit einer Öldruckleitung verbindbar ist. Ein Weggeber ist bei dieser Ausführungsform nicht vorgesehen, sondern die Steuerung erfolgt über eine Zeitsteuerung.

In dem vorveröffentlichten Dokument US-A-5097916 ist ein aktives hydropneumatisches Aufhängesystem beschrieben, mit dem die Bodenfreiheit an einem Kettenfahrzeug einstellbar ist, bei welchem die Laufräder der Kette jeweils an einer Schwinge angeordnet sind, die schwenkbar am Fahrzeuggehäuse gelagert ist, wobei jeweils zwischen der Schwinge und dem Fahrzeuggehäuse ein hydropneumatisches Federelement angeordnet ist. Die Ölkammer des hydropneumatischen Federelements ist an eine Servo-Pumpe und einen Akkumulator angeschlossen, so dass Hydraulikflüssigkeit zu oder abgeführt werden kann und somit die Bodenfreiheit des Fahrzeugs eingestellt werden kann.

Das Dokument US-A-3752499 offenbart ein hydro-mechanisches Aufhängesystem, bei dem ebenfalls die Laufräder der Kette eines Kettenfahrzeugs an einer Schwinge angeordnet sind, die schwenkbar am Fahrzeuggehäuse gelagert ist und zwischen der Schwinge und dem Fahrzeuggehäuse ist ein hydropneumatisches Federelement angeordnet. Die Ölkammern sämtlicher hydropneumatischer Federelemente sind an ein gemeinsames Zuführungssystem für Hydraulikflüssigkeit angeschlossen, von dem aus die Bodenfreiheit des Fahrzeugs eingestellt werden kann.

Der Erfindung liegt die Aufgabe zugrunde, eine Einrichtung zum Ausgleich von temperaturschwankungsbedingten Änderungen der Bodenfreiheit an einem Kettenfahrzeug zu schaffen mit einer hydraulischen Antriebsvorrichtung für den Kolben des Verstellzylinders, von der aus eine Gaszuführung und eine Gasabführung am hydropneumatischen Federelement ermöglicht wird.

Die Lösung dieser Aufgabe erfolgt mit den Merkmalen aus dem Patentanspruch 1. Vorteilhafte Weiterbildungen der Einrichtung sind Gegenstand der abhängigen Ansprüche.

Gegenstand der Erfindung ist eine Einrichtung zum Ausgleich von temperaturschwankungsbedingten Änderungen der Bodenfreiheit an einem Kettenfahrzeug bei welcher die Gaskammer mindestens eines hydropneumatischen Federelements pro Fahrzeugseite mit dem Arbeitsraum eines gasgefüllten Verstellzylinders verbunden ist. Am hydropneumatischen Federelement ist eine Messvorrichtung, beispielsweise zur Messung der Temperatur im Federelement angeordnet, welche die elektrischen Messignale abgibt. Diese Messignale werden einer elektrischen Steuereinrichtung zur Weiterberechnung zugeführt. Am Verstellzylinder ist ein Weggeber zur Messung der Kolbenverschiebung angeordnet, der elektrische Stellsignale abgibt, die ebenfalls der elektrischen Steuereinrichtung zugeführt werden. Der Kolben des Verstellzylinders wird von einer elektrisch ansteuerbaren Antriebsvorrichtung betätigt. Diese Antriebsvorrichtung ist als hydraulischer Antrieb ausgebildet, in dem an der dem Arbeitsraum des Verstellzylinders gegenüberliegenden Seite des Kolbens ein mit Hydrauliköl gefüllter Ölraum angeordnet ist, der über ein von der Steuereinrichtung her ansteuerbares 3/2-Wege-Ventil entweder mit einer Druckquelle oder mit einem Ölauffangbehälter verbindbar ist. Die Steuereinrichtung errechnet aus den Messignalen und den Stellsignalen gemäß einem vorgegebenen Programm und/oder vorgegebenen Einstellwerten Steuersignale, welche der Antriebsvorrichtung des Verstellzylinders zugeführt werden, bis ein vorgegebener Wert der Stellsignale erreicht ist, d.h. bis der gewünschte Verstellweg des Kolbens im Verstellzylinder erreicht ist, durch den die gewünschte Gasmenge vom Verstellzylinder in die Gaskammer des hydropneumatischen Federelements überführt ist und somit auch am Kolben des hydropneumatischen Federelements die gewünschte Einstellung erreicht ist, die zum Ausgleich der Bodenfreiheit des Fahrzeuggehäuses führt.

Da die Temperaturänderung an hydropneumatischen Federelementen ein vergleichsweise träger Vorgang ist, kann durch geeignete Wahl der Leitungsquerschnitte, der Verbindungsleitungen und/oder die Einschaltung von Drosseln eine langsame Änderung der Füllmenge der hydropneumatischen Federelemente erzielt werden. Dadurch bleiben kurzzeitige Temperatur/Druckänderungen durch Einfederung/Ausfederung des hydropneumatischen Federelements unwirksam und müssen nicht mitberücksichtigt werden.

Im folgenden werden anhand der beigefügten Zeichnungen die erfindungsgemäße sowie ihre Funktionsweise näher erläutert.

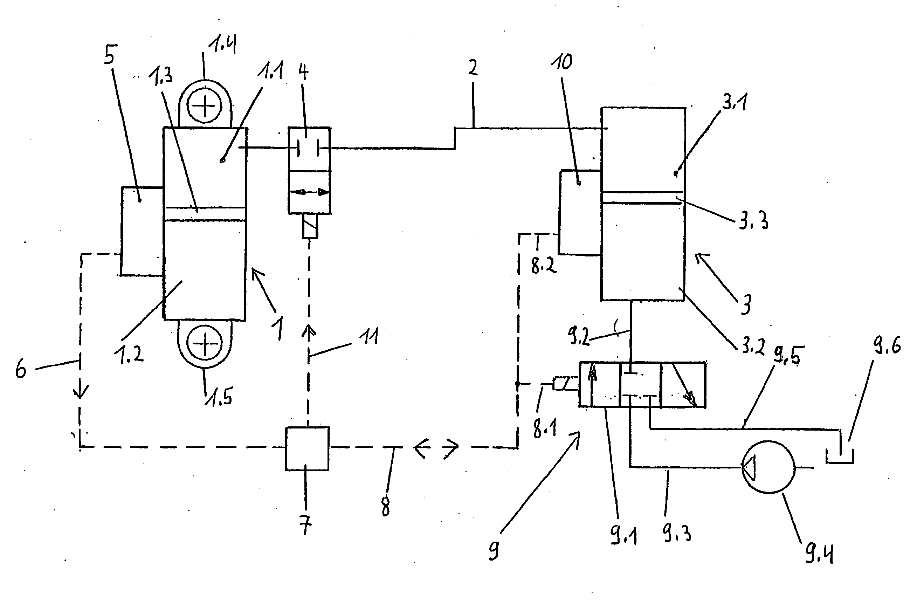

Die in der Zeichnung in einem Schaltbild dargestellte Einrichtung umfasst ein hydropneumatisches Federelement 1, das in nicht eigens dargestellter Weise zwischen dem Fahrzeuggehäuse eines Kettenfahrzeugs und einer ein Laufrad des Kettenantriebs tragenden Schwinge angeordnet ist. Das hydropneumatische Federelement 1 besitzt in an sich bekannter Weise eine Gaskammer 1.1 und eine Ölkammer 1.2, die durch einen Trennkolben 1.3 voneinander getrennt sind. Die genauere Konstruktion des hydropneumatischen Federelements wird im folgenden nicht näher erläutert. Das hydropneumatische Federelement 1 ist über Befestigungslaschen 1.4 und 1.5 am Fahrzeuggehäuse bzw. der Schwinge befestigt.

Die Gaskammer 1.1 des hydropneumatischen Federelements 1 ist über eine Zu-/Abführungsleitung 2, in welche ein elektromagnetisches Abschaltventil 4 eingeschaltet ist, mit dem gasgefüllten Arbeitsraum 3.1 eines Verstellzylinders 3 verbunden. Im Verstellzylinder 3 ist ein Verstellkolben 3.3 angeordnet, bei dessen Betätigung über die Leitung 2 und das Ventil 4 der Gaskammer 1.1 des hydropneumatischen Federelements 1 Gas zugeführt werden kann oder von ihr abgeführt werden kann. Zur Betätigung des Verstellkolbens 3.3 dient dem dargestellten Ausführungsbeispiel eine hydraulische Antriebsvorrichtung, die insgesamt mit 9 bezeichnet ist. An der dem Arbeitsraum 3.1 des Verstellzylinders 3 gegenüberliegenden Seite des Verstellkolbens 3.3 ist eine Ölkammer 3.3 angeordnet, die über eine Zu-/Abführungsleitung 9.2 und ein elektrisch ansteuerbares 3/2-Wege-ventil 9.1 einerseits über eine Zuleitung 9.3 mit einer Druckquelle 9.4 und andererseits über eine Ableitung 9.5 mit einem Ölauffangbehälter 9.1 verbindbar ist.
Am hydropneumatischen Federelement 1 ist eine Messvorrichtung 5 zur Messung der Temperatur und/oder des Drucks im Federelement angeordnet, welche elektrische Messignale abgibt, die über eine Leitung 6 einer elektrischen Steuereinrichtung 7 zugeführt werden. Die elektrische Steuereinrichtung 7 errechnet und erzeugt Steuersignale, die einerseits über die Leitung 8 und eine Zweigleitung 8.1 dem Ansteuereingang des 3/2-Wegeventils 9.1 zugeführt werden und andererseits über eine Leitung 11 zum Abschaltventil 4 gelangen. Weiterhin ist am Verstellzylinder 3 beispielsweise ein Weggeber 10 zur Messung der Kolbenverschiebung angeordnet. Grundsätzlich kann an dieser Stelle auch ein Druckgeber angeordnet sein. Der Weggeber 10 gibt elektrische Stellsignale ab, die über eine Leitung 8.2 und die Leitung 8 der elektrischen Steuereinrichtung 7 zugeführt werden.

Die Funktionsweise der beschriebenen Einrichtung ist folgende. Bei einer Temperaturänderung am hydropneumatischen Federelement 1 gibt die Messvorrichtung 5 an die Steuereinrichtung 7 Messignale ab. Die Steuereinrichtung 7 errechnet den notwendigen Verstellweg des Verstellkolbens 3.3 anhand eines vorgegebenen Programms und/oder vorgegebene Einstellwerte. Sie gibt dann einerseits ein Steuersignal zum Öffnen des im Ruhezustand geschlossenen Abschaltventils 4 ab und andererseits ein Steuersignal zum Öffnen des 3/2-Wegeventils 9. Wenn Gas zugeführt werden soll, wird das Ventil 9.1 so gesteuert, dass Hydrauliköl von der Druckquelle 9.4 in die Ölkammer 3.2 des Verstellzylinders 3 gelangt und den Verstellkolben 3.3 entsprechend verschiebt. Der Verschiebungsweg wird vom Weggeber 10 erfasst und ein entsprechendes Signal an die Steuereinrichtung 7 zurückgegeben. Aus dem Arbeitsraum 3.1 des Verstellzylinders 3 wird Gas in die Gaskammer 1.1 des hydropneumatischen Federelements überführt, wodurch sich der Trennkolben 1.3 in der Zeichnung nach unten verschiebt. Soll eine Gasabführung erreicht werden, so wird das Ventil 9.1 in eine Stellung gesteuert, in welcher das Hydrauliköl aus der Ölkammer 3.2 des Verstellzylinders 3 über das Ventil 9.1 in den Ölauffangbehälter 9.6 gelangt.

Wenn die Rückstellung des Trennkolbens 1.3 am hydropneumatischen Federelement 1 auf den gewünschten Wert durchgeführt ist, wird von der Steuereinrichtung 7 aus das Abschaltventil 4 wieder geschlossen.

Mit der dargestellten Einrichtung kann durch entsprechende Verstellung am hydropneumatischen Federelement 1 jede durch Temperaturschwankungen verursachte Änderung der Länge des hydropneumatischen Federelements 1 wieder zurückgestellt und damit die gewünschte Kettenspannung aufrecht erhalten werden.

Bei einer praktischen Ausführung der oben beschriebenen Einrichtung kann entweder jedes verstellbare hydropneumatische Federelement des Kettenfahrzeugs an einen eigenen Verstellzylinder angeschlossen sein, es können aber alternativ hierzu auch jeweils mehrere verstellbare hydropneumatische Federelemente des Kettenfahrzeugs an einen gemeinsamen Verstellzylinder angeschlossen sein. Es ist nicht unbedingt notwendig, dass sämtliche hydropneumatischen Federelemente pro Fahrzeugseite in der oben beschriebenen Weise verstellbar sind. In bestimmten Fällen kann es ausreichend sein, wenn jeweils nur einige Federelemente pro Fahrzeugseite oder nur ein Federelement pro Fahrzeugseite an einen Verstellzylinder angeschlossen sind. Im letzteren Fall muss das verstellbare Federelement im Schwerpunkt oder in der Nähe des Schwerpunkts des Fahrzeugs, bezogen auf die Fahrzeuglänge, angeordnet sein.

## Patentansprüche

1. Einrichtung zum Ausgleich von temperaturschwankungsbedingten Änderungen der Bodenfreiheit eines Fahrzeuggehäuses an einem Kettenfahrzeug, bei welchem die Laufräder der Kette jeweils an einer Schwinge angeordnet sind, die schwenkbar am Fahrzeuggehäuse gelagert ist, wobei jeweils zwischen der Schwinge und dem Fahrzeuggehäuse ein hydropneumatisches Federelement angeordnet ist mit folgenden Merkmalen:
a) Die Gaskammer (1.1) mindestens eines hydropneumatischen Federelements (1) pro Fahrzeugseite ist mit dem Arbeitsraum (3.1) eines gasgefüllten, einen Kolben (3.3) enthaltenden Verstellzylinders (3) verbunden;
b) An diesem hydropneumatischen Federelement (1) ist eine Messvorrichtung (5) zur Messung der Temperatur und/oder des Drucks im Federelement angeordnet, welche elektrische Messsignale abgibt;
c) Die Messsignale werden einer elektrischen Steuereinrichtung (7) zugeführt;
d) Am Verstellzylinder (3) ist ein Weggeber (10) zur Messung der Kolbenverschiebung und/oder ein Druckgeber zur Messung des Drucks im Verstellzylinder (3) angeordnet, der elektrische Stellsignale abgibt;
e) Die Stellsignale werden der elektrischen Steuereinrichtung (7) zugeführt;
f) Der Kolben (3.3) des Verstellzylinders wird von einer elektrisch ansteuerbaren Antriebsvorrichtung (9) betätigt, die als hydraulischer Antrieb ausgebildet ist, in dem an der dem Arbeitsraum (3.1) des Verstellzylinders (3) gegenüberliegenden Seite des Kolbens (3.3) ein mit Hydrauliköl gefüllter Ölraum (3.2) angeordnet ist, der über ein von der Steuereinrichtung (7) her ansteuerbares 3/2-Wege-Ventil (9.1) entweder mit einer Druckquelle (9.4) oder mit einem Ölauffangbehälter (9.6) verbindbar ist;
g) Die Steuereinrichtung (7) errechnet aus den Messsignalen und den Stellsignalen gemäß einem vorgegebenen Programm und/oder vorgegebenen Einstellwerten Steuersingale, welche der Antriebsvorrichtung (9) des Verstellzylinders (3) zugeführt werden, bis ein vorgegebener Wert der Stellsignale erreicht ist.

2. Einrichtung nach Anspruch 1, **dadurch gekennzeichnet, dass** in die Verbindungsleitung (2) zwischen der Gaskammer (1.1) des hydropneumatischen Federelements (1) und dem Arbeitsraum (3.1) des Verstellzylinders (3) ein von der Steuereinrichtung (7) her ansteuerbares Abschaltventil (4) eingeschaltet ist.

3. Einrichtung nach den Ansprüchen 1 und 2, **dadurch gekennzeichnet, dass** in der Steuereinrichtung (7) aus den Werten der Messsignale ein notwendiger Verstellweg für den Kolben (3.3) des Verstellzylinders (3) errechnet wird, dass dann das Abschaltventil (4) geöffnet wird und der Antriebsvorrichtung (9) für den Kolben (3.3) des Verstellzylinders (3) Steuersignale zur Betätigung des Kolbens (3.3) zugefuührt werden, bis die Stellsignale anzeigen, dass der gewünschte Verstellweg erreicht ist, worauf das Abschaltventil (4) wieder geschlossen wird.

4. Einrichtung nach einem der Ansprüche 1 bis 3, **dadurch gekennzeichnet, dass** jedes verstellbare hydropneumatische Federelement des Kettenfahrzeugs an einen eigenen Verstellzylinder angeschlossen ist.

5. Einrichtung nach einem der Ansprüche 1 bis 3, **dadurch gekennzeichnet, dass** jeweils mehrere verstellbare hydropneumatische Federelemente des Kettenfahrzeugs an einen gemeinsamen Verstellzylinder angeschlossen sind.

## Claims

1. Device for compensating for changes of the ground clearance of a vehicle housing on a tracked vehicle caused,by temperature variations, in which vehicle the running wheels of the track are each arranged on an oscillating crank which is pivotably mounted on the vehicle housing, a hydropneumatic spring element being arranged in each case between the oscillating crank and the vehicle housing, having the following features:
a) The gas chamber (1.1) of at least one hydropneumatic spring element (1) per vehicle side is connected to the working chamber (3.1) of a gas-filled adjusting cylinder (3) containing piston (3.3);
b) A measuring device (5) is arranged on this hydropneumatic spring element (1) for measuring the temperature and/or pressure in the spring element, which measuring device delivers electrical measuring signals;
c) The measuring signals are supplied to an electrical control device (7);
d) Arranged on the adjusting cylinder (3) is a displacement transducer (10) for measuring the piston displacement and/or a pressure transducer for measuring the pressure in the adjusting cylinder (3), which transducer delivers actuating signals;
e) The actuating signals are supplied to the electrical control device (7);
f) The piston (3.3) of the adjusting cylinder is actuated by an electrically controllable drive device (9) which is designed as a hydraulic drive, in which an oil chamber (3.2) filled with hydraulic oil is arranged on the side of the piston (3.3) opposite the working chamber (3.1) of the adjusting cylinder (3), which oil chamber can be connected either to a pressure source (9.4) or to an oil-collecting container (9.6) via a 3/2-way valve (9.1) controllable by the control device (7);
g) The control device (7) calculates, from the measuring signals and the actuating signals, according to a preset program and/or preset adjusting values, control signals which are supplied to the drive device (9) of the adjusting cylinder (3) until a preset value of the actuating signals is reached.

2. Device according to Claim 1, **characterised in that** a shut-off valve (4) controllable by the control device (7) is inserted into the connecting line (2) between the gas chamber (1.1) of the hydropneumatic spring element (1) and the working chamber (3.1) of the adjusting cylinder (3).

3. Device according to Claims 1 and 2, **characterised in that** a necessary adjusting displacement for the piston (3.3) of the adjusting cylinder (3) is calculated in the control device (7) from the values of the measuring signals, **in that** the shut-off valve (4) is then opened and actuating signals for actuating the piston (3.3) are supplied to the drive device (9) for the piston (3.3) of the adjusting cylinder (3) until the actuating signals indicate that the desired adjusting displacement is reached, whereupon the shut-off valve (4) is closed again.

4. Device according to one of Claims 1 to 3, **characterised in that** each adjustable hydropneumatic spring element of the tracked vehicle is connected to its own adjusting cylinder.

5. Device according to one of Claims 1 to 3, **characterised in that** in each case a plurality of adjustable hydropneumatic spring elements of the tracked vehicle are connected to a common adjusting cylinder.

## Revendications

1. Dispositif de compensation des changements de la garde au sol d'une carrosserie sur un véhicule chenillé qui sont liés à des fluctuations de température, sur lequel les roues de la chenille sont agencées respectivement au niveau d'un bras oscillant, qui est logé de manière pivotante sur la carrosserie, un élément ressort hydropneumatique présentant les caractéristiques suivantes étant agencé respectivement entre le bras oscillant et la carrosserie :
a) chaque côté de véhicule comprend au moins un élément de ressort hydropneumatique (1) comportant une chambre à gaz (1.1) reliée à la chambre de travail (3.1) d'un vérin de réglage (3) contenant le piston (3.3) rempli de gaz;
b) sur cet élément ressort hydropneumatique (1) se trouve un dispositif de mesure (5) servant à mesurer la température et/ou la pression dans l'élément ressort et qui émet des signaux de mesure électriques ;
c) les signaux de mesure sont amenés à un dispositif de commande électrique (7) ;
d) sur le vérin de réglage (3) se trouve un capteur de déplacement (10) permettant de mesurer le déplacement du piston et/ou un capteur de pression permettant de mesurer la pression dans le vérin de réglage (3) et qui émet des signaux de réglage électriques ;
e) les signaux de réglage sont amenés au dispositif de commande électrique (7) ;
f) le piston (3.3) du vérin de réglage est actionné par un dispositif d'entraînement (9) commandable électriquement, réalisé sous la forme d'un entraînement hydraulique, dans lequel est agencé du côté du piston (3.3) opposé à la chambre de travail (3.1) du vérin de réglage (3), une chambre d'huile (3.2) remplie d'huile hydraulique, qui peut être reliée soit à une source de pression (9.4) soit à un collecteur d'huile (9.6) par le biais d'une soupape 3/2 voies (9.1) commandable depuis le dispositif de commande (7) ;
g) le dispositif de commande (7) calcule à partir des signaux de mesure et des signaux de réglage selon un programme prédéfini et/ou des valeurs de réglage prédéfinies, des signaux de commande qui sont amenés au dispositif d'entraînement (9) du vérin de réglage (3), jusqu'à ce qu'une valeur prédéfinie des signaux de réglage soit atteinte.

2. Dispositif selon la revendication 1, **caractérisé en ce qu'**une soupape de coupure (4) pouvant être commandée depuis le dispositif de commande (7) est branchée dans la conduite de liaison (2) entre la chambre à gaz (1.1) de l'élément ressort hydropneumatique (1) et la chambre de travail (3.1) du vérin de réglage (3).

3. Dispositif selon les revendications 1 et 2, **caractérisé en ce qu'**une course de réglage nécessaire pour le piston (3.3) du vérin de réglage (3) est calculée dans le dispositif de commande (7) à partir des valeurs des signaux de mesure, **en ce qu'**ensuite la soupape de coupure (4) est ouverte et des signaux de commande d'actionnement du piston (3.3) sont amenés au dispositif d'entraînement (9) pour le piston (3.3) du vérin de réglage (3) jusqu'à ce que les signaux de réglage indiquent que la course de réglage souhaitée est atteinte, ce sur quoi la soupape de coupure (4) est à nouveau fermée.

4. Dispositif selon l'une quelconque des revendications 1 à 3, **caractérisé en ce que** chaque élément ressort hydropneumatique réglable du véhicule chenillé est raccordé à un propre vérin de réglage.

5. Dispositif selon l'une quelconque des revendications 1 à 3, **caractérisé en ce que** plusieurs éléments ressorts hydropneumatiques réglables du véhicule chenillé sont respectivement raccordés à un vérin de réglage commun.
